Europäisches Patentamt

European Patent Office

Office européen des brevets

(11) Veröffentlichungsnummer: **0 271 870**

**A2**

## (12) EUROPÄISCHE PATENTANMELDUNG

(21) Anmeldenummer: 87118555.9

(51) Int. Cl.⁴: **G01M 3/28**

(22) Anmeldetag: **15.12.87**

(30) Priorität: **19.12.86 DE 3643489**

(43) Veröffentlichungstag der Anmeldung:
**22.06.88 Patentblatt  88/25**

(84) Benannte Vertragsstaaten:
**AT CH DE FR GB IT LI NL SE**

(71) Anmelder: **Vetter, Manfred**
**Burg Langendorf**
**D-5352 Zülpich-Langendorf(DE)**

(72) Erfinder: **Vetter, Manfred**
**Burg Langendorf**
**D-5352 Zülpich-Langendorf(DE)**

(74) Vertreter: **Bauer, Wulf, Dr.**
**Wolfgang-Müller-Strasse 12**
**D-5000 Köln 51 (Marienburg)(DE)**

(54) **Vorrichtung zur Dichtheitsprüfung von Rohrleitungsabschnitten und Verfahren zum Lokalisieren eines Lecks.**

(57) Die Vorrichtung zur Dichtheitsprüfung für Rohrleitungsabschnitte ist vorzugsweise für die Prüfung von Hausanschlußleitungen vorgesehen. Sie hat ein vorderen Rohrdichtkissen (20), das an seiner rückwärtigen Wand (24) mit einem Schlauch für den Anschluß seines Innenraums (28) und einem Aufnahmeteil (42) für eine Distanzstange (44) verbunden ist. Sie hat zudem ein hinteres Rohrdichtkissen (22), durch das der Schlauch (26), eine Entlüftungsleitung (52) und eine Füllleitung (51) dicht hindurchgeführt sind, das mit der Distanzstange (54) verbindbar ist und das mit seinem Innenraum (46) an eine Leitung (48) für Füllen und Entleeren angeschlossen ist.

FIG. 1

# Vorrichtung zur Dichtheitsprüfung von Rohrleitungsabschnitten und Verfahren zum Lokalisieren eines Lecks

Die Erfindung bezieht sich auf eine Vorrichtung zur Dichtheitsprüfung von Rohrleitungsabschnitten, insbesondere von Abwasserleitungen und hiervon vorzugsweise von Hausanschlußleitungen und unter Verwendung von Rohrdichtkissen. Sie betrifft weiterhin ein Verfahren zum Lokalisieren eines Lecks in einem derartigen Rohrleitungsabschnitt.

Nach DIN 4033 muß jeder Anschluß und jede Leitung im öffentlichen Kanalnetz (Abwassernetz) einer Dichtigkeitsprüfung mit einem Wasserdruck mit 0,5 bar (Überdruck) unterworfen werden. Für die Prüfung von Rohrleitungsabschnitten, die an ihren beiden Endbereichen begehbar und damit frei zugänglich sind, werden Rohrdichtkissen eingesetzt, wie sie beispielsweise aus der DE-OS 27 48 614 oder dem deutschen Gebrauchsmuster 84 13 877 vorbekannt sind. Es handelt sich hierbei um einfache Rohrdichtkissen mit einem zylindrischen Mantel und zwei endseitigen, kreisförmigen Wänden, oder um Rohrdichtkissen in Form eines Ringdichtkissens, bei denen Zwei konzentrische Zylindermäntel vorgesehen sind, zwischen denen ein Medium, insbesondere Luft, eingepreßt werden kann, und die nur eine radiale, kreisförmige Wand benötigen. Diese letzteren Kissen haben häufig eine Becherform, ihre abdichtende Wand befindet sich an einem Endbereich ihres ringförmigen, aufblasbaren Körpers.

Bei der üblichen Dichtigkeitsprüfung von Rohrleitungen, beispielsweise Abwasserleitungen, wird in beide Endbereiche der Leitung jeweils ein Dichtkissen eingeschoben und durch Aufblasen der entsprechende Endbereich abgeschlossen. Mindestens ein Rohrdichtkissen hat eine durchlaufende Fülleitung für den Raum zwischen den beiden Rohrdichtkissen, so daß dieser Zwischenraum gefüllt und entleert werden kann. Durch Beobachten des statischen Drucks im Zwischenraum kann die Dichtigkeit geprüft werden, bei Druckabfall liegt ein Leck vor.

Dieses Prüfverfahren ist aber dann nicht einsetzbar, wenn die Rohrleitung nur von einer Seite aus zugänglich ist. Dies ist insbesondere bei Hausanschlüssen der Fall. Überlicherweise befindet sich unter der Straße oder dergleichen ein Hauptsammler, der verschiedene Durchmesser und Profile aufweist. Die Hausanschlußleitung, die in der Regel ein Rundrohr 150 Millimeter Durchmesser ist, ist mit Bogen und Erweiterung auf 250 Millimeter Durchmesser an den Hauptsammler angeschlossen. Ein begehbarer Revisionsschacht, der rechteckig oder rund im Querschnitt ist und bei rundem Querschnitt etwa 80 cm Durchmesser hat, ist je nach Straßenniveau 3 bis 5 Meter tief ausgebildet. Die Hausanschlußleitung ist nur von diesem Revisionsschacht aus frei zugänglich, demzufolge muß die Prüfung also ausschließlich vom Revionsschacht aus, allgemein gesprochen also von nur einer Seite aus, erfolgen. Für eine derartige Prüfung sind derzeit keine Prüfausstattungen vorhanden, auf die Prüfung von Hausanschlüssen wurde daher bislang üblicherweise verzichtet.

Hier setzt nün die Erfindung ein. Sie hat sich die Aufgabe gestellt, eine Vorrichtung zur Dichtigkeitsprüfung von Rohrleitungsabschnitten anzugeben, die nur von einer Seite aus zugänglich sind oder geprüft werden sollen. Insbesondere soll die Prüfausstattung eine Prüfung von Hausanschlüssen vom Revisionsschacht aus gestatten, ohne daß dabei die Hauptleitung begehbar sein muß.

Diese Aufgabe wird durch eine Vorrichtung zur Dichtheitsprü fung von Rohrleitungsabschnitten, insbesondere Abwasserleitungen und hierbei vorzugsweise Hausanschlußleitungen gelöst, die zwei Rohrdichtkissen aufweist, nämlich ein vorderes Rohrdichtkissen, das an seiner rückwärtigen Wand einerseits an einen Schlauch für Füllen und Entleeren angeschlossen ist und andererseits ein Aufnahmeteil für eine schub-und zugfeste Distanzstange aufweist und ein hinteres, vorzugsweise als Ringdichtkissen ausgebildetes Rohrdichtkissen, durch das der Schlauch, eine Entlüftungsleitung und eine Fülleitung für den Raum zwischen den beiden Rohrkissen hindurchgeführt sind, das mit der Distanzstange verbindbar ist und an dessen Innenraum eine Leitung für Füllen und Entleeren angeschlossen ist.

Bei dieser Vorrichtung zur Dichtheitsprüfung wird das vordere Rohrdichtkissen zunächst von dem einen Ende des zu prüfenden Rohrleitungsabschnitts in diesen hineingeschoben. Die Distanzstange dient dazu, dieses vordere Rohrdichtkissen durch den gesamten Rohrleitungsabschnitt bis zu einer gewünschten Position vorzuschieben. Diese Position kann durch die Länge der Distanzstange oder durch einen Fühler an der frontseitigen, kreisförmigen Wand bestimmt werden. Anschließend wird das zweite, hintere Rohrdichtkissen endseitig in die Rohrleitung eingeschoben.

Wird nun das vordere Kissen durch den Schlauch und das hintere Kissen durch die Leitung mit Druckluft gefüllt, so legen sich beide Kissen an die Innenwand der zu prüfenden Rohrleitung an und begrenzen zwischen sich einen Zwischenraum, dessen Dichtheit geprüft werden kann. Die Distanzstange hält die beiden Rohrdichtkissen im gewünschten Abstand und nimmt axiale Kräfte auf, wie sie beim späteren Prüfen auftreten.

Der Zwischenraum kann nun über die Fülleitung mit Wasser gefüllt werden, in ihm enthaltene Luft strömt dabei über die Entlüftungsleitung ab. Letztere hat vorzugsweise einen Schwimmer, der dafür sorgt, daß stets die Luft an der höchst gele genen Stelle im Rohrquerschnitt abgeführt werden kann. Tritt an der Entlüftungsleitung nicht mehr Luft, sondern Wasser aus, ist sichergestellt, daß der Zwischenraum zwischen den beiden Rohrdichtkissen mit Wasser gefüllt ist.

Es wird nun der Prüfdruck von 0,5 bar oder ein anderer, gewünschter Prüfdruck, aufgebracht und nach Absperren der Wasserzufuhr beobachtet, wie sich der Druck im abgesperrten Zwischenraum verändert. Hierzu ist an der Fülleitung ein Manometer angeschlossen. Fällt der Druck langsam ab, so läßt dies auf ein Leck in der getesteten Rohrleitungsstrecke schließen. Bleibt der Druck aber konstant, so ist die getestete Rohrleitung dicht.

Vorzugsweise wird als Taster, der an der vorderen Stirnwand des vorderen Rohrdichtkissens angeordnet ist, eine längenveränderliche Stange mit einer Kugel an ihrem vorderen Ende verwendet. Durch die Kugel wird verhindert, daß sich der Taster in einer Trennfuge oder an kleinen Kanten verhaken kann, wenn das vordere Kissen mittels der Distanzstange in die zu testende Rohrstrecke eingeschoben wird. Aufgrund der Längenveränderbarkeit der Tasterstange ist es möglich, den Abstand des vorderen Rohrdichtkissens von einer örtlichen Gegebenheit abhängig zu machen. So wird beispielsweise bei Testung eines Hausanschlusses die Länge der Tasterstange eingestellt auf den Rohrdurchmesser des Hauptsammlers.

In bevorzugter Ausbildung der Erfindung ist im hinteren Rohrdichtkissen eine Gleitdichtung für die Distanzstange vorgesehen, so daß diese abgedichtet axial bewegt werden kann, wenn das hintere Rohrdichtkissen aufgeblasen und damit ortsfest fixiert ist. Auf diese Weise ist es möglich, das vordere Kissen hin-und herzubewegen, ohne das hintere Kissen bedienen zu müssen. Auf diese Weise lassen sich Lecks in dem zu prüfenden Rohrleitungsabschnitt lokalisieren.

Die Erfindung löst also die weitere Aufgabe, ein Verfahren zum Lokalisieren von Lecks in Rohrleitungen mit Zugang von nur einem Endbereich anzugeben, indem sie unter Verwendung der soeben beschriebenen Vorrichtung zur Dichtheitsprüfung vorschlägt, diese für ein Verfahren zum Lokalisieren eines Lecks einzusetzen, bei dem bei gefülltem und damit absperrendem hinteren Kissen die Position des vorderen Kissens verändert wird, indem die Distanzstange gezogen oder gedrückt wird. Das vordere Kissen wird in der jeweiligen neuen Position gefüllt, so daß es ebenfalls abdichtet. Anschließend wird die Dichtheit des so neu begrenzten Teilabschnittes des Innenraums überprüft.

Befindet sich ein Leck in einem längeren Rohrleitungsabschnitt, so wird es, bei Prüfung der Gesamtstrecke, zunächst erfaßt und macht sich in einem Druckverlust bemerkbar. Ändert man nun in einem zweiten Schnitt die axiale Position des vorderen Rohrkissens, so tritt irgendwann der Fall auf, daß das Leck vom vorderen Rohrdichtkissen überfahren wird, sich also außerhalb des zwischen den beiden Rohrdichtkissen befindlichen Zwischenraums befindet. Dieser Zustand wird dadurch angezeigt, daß die nun getestete Rohrstrecke dicht ist. Man kann auf diese Weise die Position eines Lecks recht genau, beispielsweise auf 10 Zentimeter genau, feststellen.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:

Fig. 1 einen Axialschnitt durch die Vorrichtung zur Dichtheitsprüfung, die sich innerhalb eines Rohres befindet, und

Fig. 2 eine Darstellung entsprechend Fig. 1, jedoch für eine andere Ausführung.

Die Vorrichtung zur Dichtigkeitsprüfung nach den Figuren besteht im wesentlichen aus zwei Rohrdichtkissen, einem vorderen Rohrdichtkissen 20 und einem hinteren Rohrdichtkissen 22. Ihre Konstruktion ist ansich bekannt, es wird hierzu auf die DE-OS 27 48 614, die US-PS 3,459,230, die GB-OS 1245 254 und das deutsche Gebrauchsmuster 84 13 877 verwiesen.

Das vordere Rohrdichtkissen 20 hat an seiner kreisrunden, rückwärtigen Wand 24 ein Anschlußstück für einen Schlauch 26, durch den sein Innenraum 28 in bekannter Weise gefüllt und entleert werden kann. In den beiden Figuren ist das vordere Rohrdichtkissen 20 jeweils im aufgeblasenen Zustand gezeigt, es hat dann eine im wesentlichen tonnenförmige Form und liegt mit seinem Zylindermantel 30 dichtend an der Innenwand eines zu testenden Rohrs 32 an.

An der vorderen, kreisrunden Wand 33 des vorderen Rohrdichtkissens 20 ist zentrisch ein Taster 34 befestigt. Er setzt sich aus einer relativ steifen Schraubenfeder 36, einem längenveränderlichen, z. B. teleskopierbaren oder aus mindestens zwei miteinander verschraubten Stücken bestehenden Stab 38 und einer Kugel 40 am freien Ende des Stabes zusammen. Durch die Schraubenfeder 36 wird erreicht, daß der starre Stab 38 elastisch in Längsrichtung des Rohres 32 gehalten wird, aber aus dieser Richtung ausgelenkt werden kann, ohne den Verbindungsbereich mit der vorderen Wand 33 zu belasten. Der Stab 38 ist vorzugsweise mit einer Zentimeterteilung versehen, so daß er auf gängige Durchmesser und Abmessungen von Rohren, Sammlern u.s.w. eingestellt werden kann. Die Kugel 40 am freien Ende des Stabes 38 dient dazu, daß der Taster 34 nicht an kleinen Hindernissen, beispielsweise einer Trennfuge oder Verschmutzungen im Rohr, festgehalten werden kann. Entscheidend beim Taster 34 ist lediglich der längenveränderliche Stab 38, der innerhalb eines vorgegebenen Längenbereichs, beispielsweise 15 bis 50 cm, längenveränderlich ist und eine einmal eingestellte Länge beibehält, ohne zu stauchen. Die weiteren Teile (Schraubenfeder 36 und Kugel 40) bringen Verbesserungen für den praktischen Betrieb.

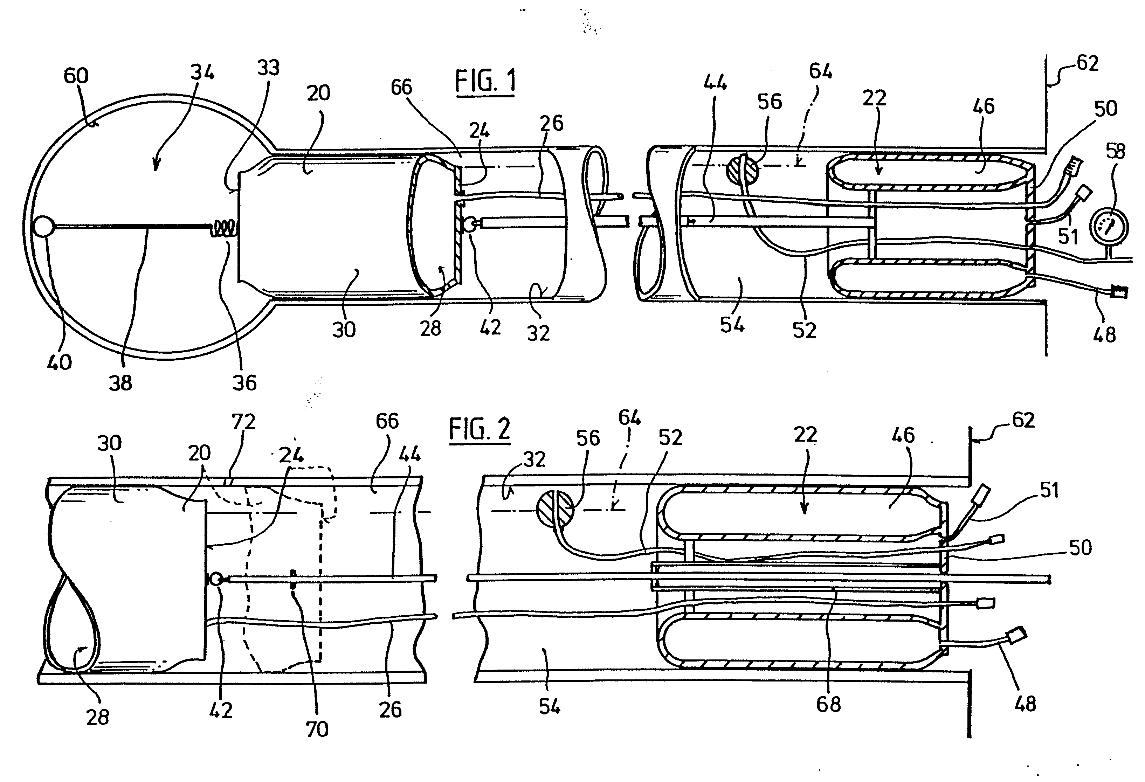

An seiner rückwärtigen Wand 24 hat das vordere Rohrdichtkissen 20 schließlich ein Aufnahmeteil 42 in Form eines Ringes für eine schub-und zugfeste Distanzstange 44. Letztere besteht vorzugsweise aus einzelnen, miteinander starr kuppelbaren Abschnitten, beispielsweise im wesentlichen starren Metall oder Kunststoffstangen, die an einem Ende einen Schraubansatz und an ihrem anderen Ende ein zentrisches Sackloch mit Gewindebohrung haben. Eine entsprechende Verbindung ist in Fig. 1 gestrichelt angedeutet. Daneben sind aber auch andere Ausbildungen der Distanzstange möglich. Entscheidend ist lediglich, daß sie auf eine gewünschte Länge einstellbar ist und die einmal eingestellte Länge sowohl bei einer Zugbelastung, als auch bei einer Druckbelastung beibehält.

Das hintere Rohrdichtkissen ist in den gezeigten Ausführungsbeispielen als Ringdichtkissen ausgebildet, diese Ausbildung ist zwar vorteilhaft, aber nicht für die Erfindung notwendig, vielmehr kann das hintere Rohrdichtkissen 22 auch ein normales, einfaches Rohrdichtkissen sein wie das vordere Rohrdichtkissen 20. Das hintere Rohrdichtkissen hat einen ringförmigen, luftdichten Innenraum 46, der über eine Leitung 48 zum Füllen und Entleeren angeschlossen ist. Sie ist, wie der Schlauch 26, mit einer Schnellkupplung versehen. Das Rohrdichkissen ist hinten durch eine Kreiswand 50 abgeschlossen, vorn ist sein Innenraum offen, es ist ringesamt also becherförmig. Durch die Kreiswand 50 sind luft-und wasserdicht der Schlauch 26, eine später noch zu beschreibende Fülleitung 51 und eine Entlüftungsleitung 52 hindurchgeführt. Letztere endet in einem Raum 54, im folgenden Zwischenraum54 genannt, zwischen den beiden Rohrdichtkissen 20, 22 und hat an ihrem dort befindlichen freien Ende einen Schwimmer 56, durch den sichergestellt ist, daß beim Füllen des Zwischenraums 54 mit Wasser das (in den Figuren linke) Ende der Entlüftungsleitung 52 sich immer im obersten Querschnittsteil des zu testenden Rohrabschnitts befindet, so daß dort befindliche Luft abgeleitet werden kann.

Die Distanzstange 44 ist am zylindrischen Innenmantel des Rohrdichtkissens 22 befestigt, hierzu ist ein Stern vorgesehen. Andere Befestigungsmöglichkeiten sind möglich, die gezeigte Art ist lediglich ein Beispiel für eine Ausführungsart. Entscheidend ist lediglich, daß auch das hintere Rohrdichtkissen 22 mit der Distanzstange 44 verbindbar ist, so daß über die Distanzstange 44 zumindest ein Anteil der in Axialrichtung des Rohres 32 wirkenden Spreizkräfte aufgefangen werden kann, wenn der Zwischenraum 54 mit Wasser unter Druck gefüllt ist. Auf diese Weise kann mit den beiden Rohrdichtkissen 20, 22 ein relativ großer Druck im Zwischenraum 54 abgedichtet werden, ohne daß befürchtet werden muß, daß ein Rohrdichtkissen dem Druck nachgibt und axial auswandert, denn in diesem Fall müßte es das andere Rohrdichtkissen hinter sich und gegen den Druck der Wassersäule im Zwischenraum 54 ziehen.

Grundsätzlich ist es aber nicht nötig, die Distanzstange 44 auch am hinteren Rohrdichtkissen 22 zu befestigen. Die Distanzstange dient prizipiell dazu, das vordere Rohrdichtkissen 20 axial innerhalb des Rohres 32 weit vorschieben und wieder zurückholen zu können. In einer verschlechterten Ausbildung ist es daher durchaus möglich, das rechte Ende (Fig. 1) der Distanzstange 44 einfach auf die Innenwand des Rohres 32 oder den Innenmantel des ringförmigen Rohrdichtkissens 22 fallen zu lassen. Dann aber ist die Handhabung verschlechtert, das Rohrende muß jeweils aufgenommen werden und fällt normalerweise auf den Boden des Rohres 32, der bei benutzten Abwasserrohren beispielsweise verschmutzt ist.

Die Entlüftungsleitung 52 hat an ihrem hinter dem hinteren Rohrdichtkissen 22 befindlichen Endbereich einerseits ein (nicht dargestelltes) Ventil und ist andererseits mit einem Druckmesser 58 verbunden. Über ihn wird der Druck im Zwischenraum 54 beobachtet.

Beim praktischen Einsatz wird zunächst der Taster des vorderen Rohrdichtkissens 20 eingestellt, seine Länge soll im wesentlichen dem Durchmesser eines am anderen, nicht zugänglichen Endbereichs des Rohrs 32 befindlichen Sammlers entsprechen. Anstelle eines Sammlers 60 kann auch ein Rohrbogen, ein Schacht oder dergleichen vorgesehen sein. Entscheidend ist lediglich, daß dieses Teil nicht direkt zugänglich ist, sondern die Prüfung der Rohrleitung 32 auf Dichtheit ausschließlich von dem in den Figuren rechts befindlichen Revisionsschacht 62 aus erfolgen kann oder soll.

Nach Einstellen des Tasters 34 wird das vordere, nicht aufgeblasene Rohrdichtkissen 20 ausgehend vom Revisionsschacht 62 durch die Rohrleitung 32 geshoben, die beliebige Längen aufweisen kann. Das Rohrdichtkissen 20 wird dabei über die Distanzstange 44 betätigt, diese besteht beispielsweise aus Abschnitten mit einem Meter Länge, die (entsprechend einem Bohrgestänge) aneinander geschraubt werden und deren Zahl zugleich die Länge der Distanzstange 44 in einfacher Weise angibt. Ist der Taster 34 mit seinem vorderen Ende (Kugel 40) gegen die abgelegene Wand des Sammlers 60 (oder die Wand eines Rohrbogens, querlaufenden Rohres oder dergleichen) gestoßen, so stellt sich dem weiteren Vorschub des vorderen Rohrdichtkissens 20 ein deutlicher Widerstand entgegen, der zudem durch die elastische Wirkung der Feder 36 für den Benutzer spürbar ist.

In diesem Zustand wird gegebenenfalls das letzte Verlängerungsstück der Distanzstange 44 entfernt und das (in den Figuren) rechte Ende der Distanzstange 44 mit dem hinteren Rohrdichtkissen 22 verbunden, das - gegebenenfalls nach einem geringfügigen Rückbewegen des vorderen Rohrdichtkissens 20 - nun seinerseits in das Rohr 32 eingeschoben wird, wobei auch das vordere Rohrdichtkissen 20 wieder nach vorn geschoben wird. Auf diese Wese wird die in Fig. 1 gezeigte Position, die die Ausgangsposition für die Dichtigkeitsprüfung ist, erreicht.

Nun werden die beiden Rohrdichtkissen 20, 22 über den Schlauch 26 bzw. die Leitung 48 mit Druckluft gefüllt, sie dichten mit ihrem Mantelbereich ab und schließen dadurch den Zwischenraum 54 axial dicht ab.

Im nächsten Schritt wird der Zwischenraum 54 über die Fülleitung 51 langsam mit Wasser gefüllt, im Zwischenraum 54 steigt dabei der Wasserspiegel 64 an, wie in den Figuren durch einen Zwischenstand angedeutet ist. Oberhalb des Wasserspiegels 64 befindet sich ein Luftraum 66. In ihm endet die Entlüftungsleitung 52 dank des Schwimmers 56, wodurch die Luft durch die Entlüftungsleitung 52 abströmen kann und der Luftraum 66 bei weiterem Füllen des Zwischenraums 54 durch die Fülleitung 51 mit Wasser praktisch verschwindet. Dieser Zustand wird dadurch angezeigt, daß am Austrittsende der Entlüftungsleitung 54 nur noch Wasser austritt.

Daraufhin wird das Austrittsende der Entlüftungsleitung 52 verschlossen und der Prüfdruck über die Fülleitung 51 im Zwischenraum 54 aufgebracht. Er kann am Druckmesser 58 abgelesen werden. Ist er erreicht, so wird die Fülleitung 51 durch ein (nicht eingezeichnetes) Ventil abgesperrt, das System ist dann abgeschlossen. Bleibt nun der am Druckmesser 58 abzulesende Druck im Zwischenraum 54 zeitlich konstant, so liegt im Zwischenraum 54 kein Leck vor. Fällt der Druck aber ab, so muß eine Undichtigkeit vorliegen, deren Leckrate zudem noch über den zeitlichen Druckabfall abgeschätzt werden kann.

Mit Hilfe der Lecktestvorrichtung gemäß Fig. 1 können Rohrstränge auf ihre Dichtigkeit geprüft werden, bevor sie unzugänglich werden, biespielsweise Erdreich darüber geschüttet wird, eine Ummantelung aufgebracht wird oder dergleichen.

Aufgrund der die beiden Rohrdichtkissen 20, 22 verbindenden Distanzstange 44 kann im Zwischenraum 54 ein relativ hoher Druck aufgebracht werden, ohne daß die Rohrdichtkissen sich verschieben können. Dieser Druck ist höher als derjenige Druck, den die beiden Rohrdichtkissen 20, 22 ohne die Distanzstange 44 abfangen könnten.

Im Ausführungsbeispiel nach Fig. 2 ist die Distanzstange 44 an ihrem rechten Endbereich nicht starr mit dem hinteren Rohrdichtkisen 22 verbindbar, vielmehr ist die Distanzstange 44 abgedichtet axial gegenüber dem hinteren Rohrdichtkissen 22 verschiebbar, so daß das vordere Rohrdichtkissen 20 axial bewegt werden kann, ohne die Position des hinteren Rohrdichtkissens 22 verändern zu müssen.

Im Ausführungsbeispiel nach Fig. 2 befindet sich zentrisch im als Ringdichtkissen ausgebildeten hinteren Rohrdichtkissen 22 ein etwa die Kissenlänge aufweisendes Rohr, das an seinen Endbereichen eine Gleitringdichtung aufweist. Durch das Rohr kann die als runde Stange ausgebildete Distanzstange hindurchgeschoben werden, ohne daß dabei Dichtigkeitsprobleme auftreten. Ein völliges Herausziehen der Distanzstange 44 aus dem Rohr 68 wird durch eine Scheibe 70 verhindert. Die Distanzstange 44 ist wiederum aus einzelnen Stangenabschnitten durch Bajonett-, oder Schraubverbindungen zusammengesetzt. Dabei wird ein glatter Außenmantel gebildet, der unabhängig von seiner axialen Position der Gleitringdichtung eine ausreichende Abdichtung bewirkt.

Mit der Anordnung gemäß Fig. 2 ist die Lokalisierung eines Lecks 72 im Rohr 32 möglich. Zunächst soll sich das vordere Rohrdichtkissen 20 in der mit vollen Strichen gezeichneten Lage, also der linken Position in Fig. 2, befinden. Wird in diesem Zustand der Zwischenraum 54 mit Wasser gefüllt, so kann Wasser durch das Leck 72 abfließen, was sich in einem Druckschwund am Druckmesser 58 bemerkbar macht.

Wird nun das vordere Rohrdichtkissen 20 etwas entspannt und mittels der Distanzstange 44 näher an das hintere Rohrdichtkissen 22 in die gestrichelte Lage gebracht, so befindet sich das Leck 72 nicht mehr im Zwischenraum 54, beim nachfolgenden Dichtheitsversuch zeigt sich also kein Leck. Damit steht fest, daß sich das Leck 72 zwischen den beiden gezeichneten Positionen des vorderen Rohrdichtkissens 20 befinden muß.

Bei der Dichtheitsprüfung gemäß der genannten DIN 40 33 ist ein Druckmesser 58 nicht notwendig, vielmehr wird das ·Schwundmaß über die Pegelhöhe beobachtet. Hierzu wird an die Fülleitung 51 oder die Entlüftungsleitung 52 ein Schlauch angeschlossen, der - bei einem Prüfdruck von 0,5 bar - fünf Meter oberhalb des Bodens des zu prüfenden Rohres 32 endet, so daß sich im Rohr 32 ein Druck von 0,5 bar einstellt. Die andere Leitung 52 bzw. 51 wird abgesperrt. Man beobachtet nun die Flüssigkeitssäule, sinkt sie ab, so liegt ein Leck vor. Seine Größe kann man dadurch abschätzen, daß ständig Wasser nachgeschüttet wird und der Flüssigkeitsspiegel auf einem Niveau gehalten wird.

**Ansprüche**

1. Vorrichtung zur Dichtheitsprüfung von Rohrleitungsabschnitten, insbesondere von Abwasserleitungen und hiervon vorzugsweise von Hausanschlußleitungen,
mit einem vorderen Rohrdichtkissen (20), das an seiner rückwärtigen Wand (24) einerseits an einen Schlauch (26) für Füllen und Entleeren seines Innenraums (28) angeschlossen ist und andererseits ein Aufnahmeteil (42) für eine schub-und zugfeste Distanzstange (44) aufweist und mit einem hinteren, vorzugsweise als Ringdichtkissen ausgebildeten Rohrdichtkissen (22), a) durch das der Schlauch (26), eine Entlüftungsleitung (52) und eine Fülleitung (51) dicht hindurchgeführt sind, b) das mit der Distanzstange (44) verbindbar ist und c) an dessen Innenraum (46) eine Leitung (48) für Füllen und Entleeren angeschlossen ist.

2. Vorrichtung nach Anspruch 1, dadurch gekennzeichnet, daß die Distanzstange (44) aus einzelnen, starren und vorzugsweise im Querschnitt runden Teilstücken über starre Kupplungen, vorzugsweise Schraub-oder Bajonettkupplungen, zusammensetzbar ist.

3. Vorrichtung nach Anspruch 1 oder 2, dadurch gekennzeichnet, daß die Distanzstange (44) ein in seiner Länge kontinuierlich einstellbares Teilstück, beispielsweise teleskopierbares Teilstück oder aus zwei ineinandergreifenden Gewindeteilen bestehenden Teilstück aufweist.

4. Vorrichtung nach einem der Ansprüche 1 bis 3, dadurch gekennzeichnet, daß das vordere Rohrdichtkissen (20) an seiner vorderen Wand (33) einen Taster (34) aufweist, der vorzugsweise einen druckfesten, längenveränderbaren Stab (38) und eine an seinem freien Ende angeordnete Kugel (40) hat.

5. Vorrichtung nach einem der Ansprüche 1 bis 4, dadurch gekennzeichnet, daß am Ende der Entlüftungsleitung (52) ein Schwimmer (56) angeordnet ist.

6. Vorrichtung nach einem der Ansprüche 1 bis 5, dadurch gekennzeichnet, daß das hintere Rohrdichtkissen (22) eine vorzugsweise zentrisch angeordnete Gleitringdichtung aufweist, durch die die im Querschnitt runde Distanzstange (44) axial verschiebbar dicht hindurch geführt ist.

7. Vorrichtung nach einem der Ansprüche 1 bis 6, dadurch gekennzeichnet, daß die beiden Rohrdichtkissen (20, 22) die gleichen Außendurchmesser aufweisen.

8. Vorrichtung nach einem der Ansprüche 1 bis 7, dadurch gekennzeichnet, daß am außerhalb des hinteren Rohrdichtkissens (22) befindliche Teilstück der Entlüftungsleitung (52) ein Druckmesser (58) und dahinter ein Absperrventil angeordnet sind.

9. Verfahren zum Lokalisieren eines Lecks (72) in einer Rohrleitung (32) unter Verwendung einer Vorrichtung nach den ansprüchen 1 bis 8, dadurch gekennechnet, daß nach feststellen eines Lecks (72) im Zwischenraum (54) zwischen den beiden Rohrdichtkissen (20, 22) ein Rohrdichtkissen (z. B. 20) axial schrittweise auf das andere Rohrdichtkissen (z. B. 22) geschoben bzw. gezogen wird, die Dichtheit des so gebildeten, kürzeren Zwischenraums (54) ermittelt wird und so lange fortgefahren wird, bis der verkleinerte Zwischenraum (54) dicht ist.

0 271 870

FIG. 1

FIG. 2